# FASCICULE DE BREVET EUROPEEN

(11) **EP 1 747 114 B1**
(45) Date de publication et mention de la délivrance du brevet: **14.07.2010**
(21) Numéro de dépôt: 05746898.5
(22) Date de dépôt: 28.04.2005
(51) Int. Cl.: B60N 2/015

(54) **DISPOSITIF D'OBTURATION D'UN ELEMENT DE BLOCAGE**
VORRICHTUNG ZUM EINSTECKEN EINES SPERRELEMENTS
DEVICE FOR PLUGGING A BLOCKING ELEMENT

(30) Priorité: 13.05.2004 FR 0450924
(43) Date de publication de la demande: 31.01.2007
(73) Titulaire: RENAULT S.A.S., 92100 Boulogne Billancourt (FR)
(72) Inventeur: BROIZIN-DOUTAZ, Marc, F-78280 Guyancourt (FR); HLUBINA, Thierry, F-92372 Chaville (FR)
(74) Mandataire: Religieux, Vincent
(86) Numéro de dépôt international: PCT/FR2005/050288
(87) Numéro de publication internationale: WO 2005/113281

(56) Documents cités:
- EP-A- 1 258 389
- FR-A- 2 793 199
- FR-A- 2 832 105
- FR-A- 2 859 417

## Description

La présente invention concerne un dispositif d'obturation d'un élément de blocage, notamment lors de l'utilisation d'un tel élément de blocage pour des sièges automobiles amovibles.

Divers dispositifs de blocage destinés aux sièges automobiles amovibles sont déjà connus. Dans tous les cas, ces systèmes permettant une mise en place relativement rapide et aisée du siège amovible, tout en assurant, lorsque ledit siège est en place, un niveau d'immobilisation et de sécurité correct, et en évitant les déverrouillages intempestifs.

On a cependant constaté un inconvénient lié à ces dispositifs. Lorsque ledit siège est retiré de son emplacement, ce qui est l'une des configurations recherchées pour des véhicules dits "monospace", par exemple, l'orifice de la cavité débouchante ménagée dans le plancher dudit véhicule pour le verrouillage dudit siège est laissé ouvert. Il existe alors un risque de chute d'objets de petite taille dans ladite cavité par l'intermédiaire dudit orifice, lesdits objets pouvant, dans certains cas, interdire totalement la mise en place ultérieure dudit siège, ou risquant, dans d'autres cas, de n'autoriser qu'un verrouillage incomplet dudit siège, induisant alors un danger potentiel en cas de choc, par exemple.

La présence de ces orifices ouverts nuit en outre également à la perception esthétique que l'utilisateur a de l'habitacle de son véhicule.

La Demanderesse a divulgué, dans la demande non encore publiée FR 03-10599, une solution formée d'une lame élastique dont une partie vient obturer l'orifice et dont une autre partie permet le soudage ou le rivetage sur le plancher. Dans ces solutions, différents problèmes sont liés au type de montage choisi. Dans le cas d'un rivetage de la lame, le trou de rivetage nécessaire implique des problèmes d'étanchéité, tandis que dans le cas d'un soudage de la lame, il existe un compromis difficile à trouver entre l'élasticité désirée de la lame et la rigidité de cette lame nécessaire pour le soudage sur le plancher.

Du document EP 1 258 389, on connaît un dispositif d'obturation, qui montre les caractéristiques du préambule de la revendication1.

La présente invention a pour but de pallier les inconvénients des solutions connues, à la fois sur le plan esthétique et fonctionnel, et de proposer un dispositif d'obturation permettant une mise en place aisée au montage, d'améliorer la qualité perçue du véhicule lorsque le siège amovible est déverrouillé, et de limiter les risques de mauvais verrouillage dudit siège lors de sa mise en place.

La présente invention atteint son but grâce à un dispositif d'obturation d'un élément de blocage, du type comprenant un opercule mobile susceptible de prendre une position de fermeture dans laquelle l'opercule forme l'obturation d'un orifice de l'élément de blocage et une position escamotée dans laquelle cet opercule mobile s'escamote sous ledit élément de blocage pour laisser le passage dans l'orifice à un élément de verrouillage apte à coopérer avec ledit élément de blocage, caractérisé en ce que le dispositif comprend une pièce d'obturation formée d'une part d'une première partie supérieure qui est apte à être emboîtée élastiquement autour de l'élément de blocage et qui présente une forme apte à laisser libre le passage à travers l'orifice de l'élément de blocage, et d'autre part d'une deuxième partie formée de l'opercule mobile, dont une extrémité vient obturer l'orifice de l'élément de blocage dans ladite position fermée de l'opercule.

Selon d'autres caractéristiques de l'invention :
- la première partie supérieure de la pièce d'obturation comprend un bord formé par un épaulement qui est au contact d'un premier bord de l'élément de blocage et en ce que le bord opposé de cette partie supérieure est formé d'un bord tombé, au contact d'un second bord de l'élément de blocage, de sorte que la pièce d'obturation est arrêtée en translation par rapport à l'élément de blocage,
- au moins deux bords opposés de la première partie supérieure de la pièce d'obturation présentent des bords relevés, de sorte que la pièce d'obturation est arrêtée en translation par rapport à l'élément de blocage,
- la pièce d'obturation est formée d'une partie centrale qui porte la partie supérieure et l'opercule mobile, de sorte que l'intersection de cette partie centrale et de l'opercule mobile définit l'axe de rotation de l'opercule mobile,
- l'épaulement est formé par l'intersection de la partie centrale avec la partie supérieure,
- l'extrémité de l'opercule mobile, qui vient obturer l'orifice de l'élément de blocage dans la position fermée de l'opercule, présente une partie creuse.

D'autres caractéristiques et avantages de l'invention ressortiront à la lecture de la description qui suit, en référence aux dessins annexés, dans lesquels :
- la figure 1 est une vue en coupe selon un plan sensiblement vertical de l'état de la technique.
- la figure 2 est une vue en coupe selon un plan sensiblement vertical d'un mode de réalisation de l'invention, dans laquelle l'organe mobile de verrouillage à billes escamotables est représenté en position déverrouillée, l'opercule d'obturation étant en place,
- la figure 3 est une vue en coupe d'un mode de réalisation particulier de l'invention, dans laquelle ledit organe de verrouillage est en position verrouillée et l'opercule d'obturation est en position escamotée,
- la figure 4 est une vue en perspective d'un mode de réalisation de la pièce d'obturation selon un mode de réalisation particulier de l'invention.

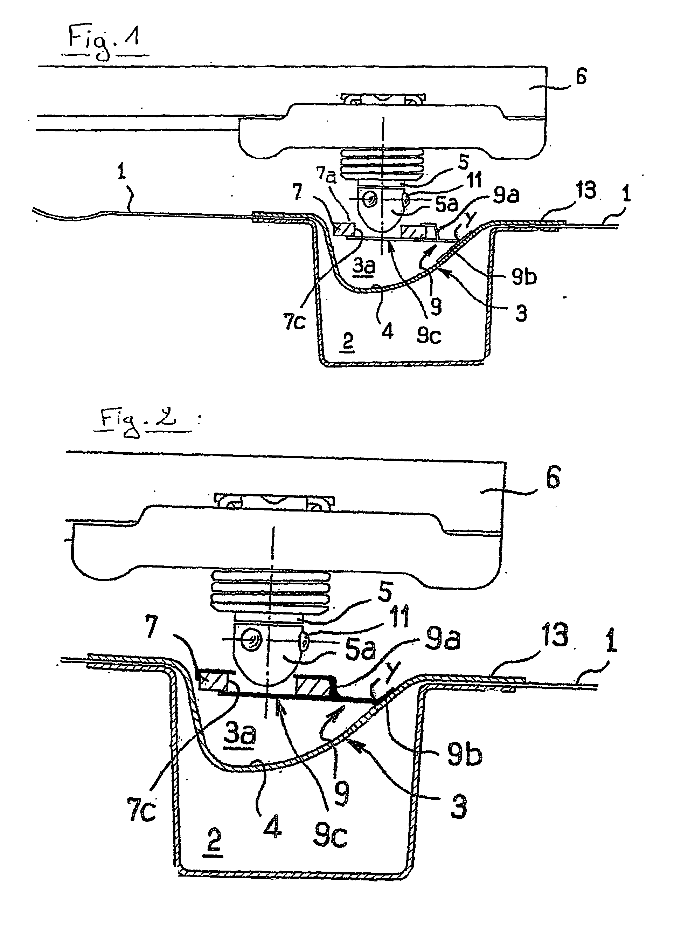

La figure 1 représente l'enseignement connu de la demande non publiée, citée plus haut, FR 03-10599. Ainsi, une cavité 2 est ménagée dans le plancher 1 d'un véhicule automobile, ladite cavité 2 débouchant vers !e haut. Cette cavité sert à loger un élément de blocage 7 destiné à immobiliser un élément de verrouillage 5 d'un siège amovible 6. Cet élément de verrouillage, mobile en translation, comporte de façon connue en soi des billes escamotables 11 à l'arrière d'une partie arrondie de pénétration 5a***.*** La cavité 2 est équipée d'une pièce ou boîtier de fixation 3, généralement constitué d'une plaque de tôle formée en cuvette 4 (par exemple par emboutissage) de manière à épouser partiellement ou en totalité la forme de ladite cavité 2, et définir un volume 3a restreint débouchant vers le haut. Le boîtier 3 comporte autour de la cuvette 4 une bordure périphérique plane 13 qui est rendue solidaire du planche 1 du véhicule par des moyens connus et non représentés sur les figures, notamment par soudure. Cette solidarisation peut n'intervenir qu'une fois le boîtier équipé de l'élément de blocage et de l'opercule mobile que l'on va maintenant décrire.

Le volume 3a défini par le boîtier 3 accueille à sa partie supérieure l'élément de blocage 7 formant gâche destinée à coopérer avec le pêne 5 à billes escamotables. Cet élément de blocage 7 est sous forme d'une plaque de tôle formant gâche et munie d'un orifice 7c, la plaque étant solidarisée à la cuvette 4. Par exemple, la cuvette 4 qui est de forme sensiblement rectangulaire à sa partie supérieure peut comporter sur les parois latérales formant ses deux côtés longitudinaux des épaulements non représentés sur lesquels la plaque 7 peut être appuyée latéralement et soudée.

Le volume 3a accueille aussi la pièce d'obturation 9. Celle-ci est formée par une pièce métallique en tôle mince (quelques millimètres) découpée et formée ou une pièce plastique mince conformée pour présenter au moins une partie inférieure allongée en lamelle ou languette, qui forme un opercule mobile 9c venant s'articuler de manière élastique (par exemple par un pliage sur l'axe Y) sur une partie centrale 9b formée en tête de la pièce.

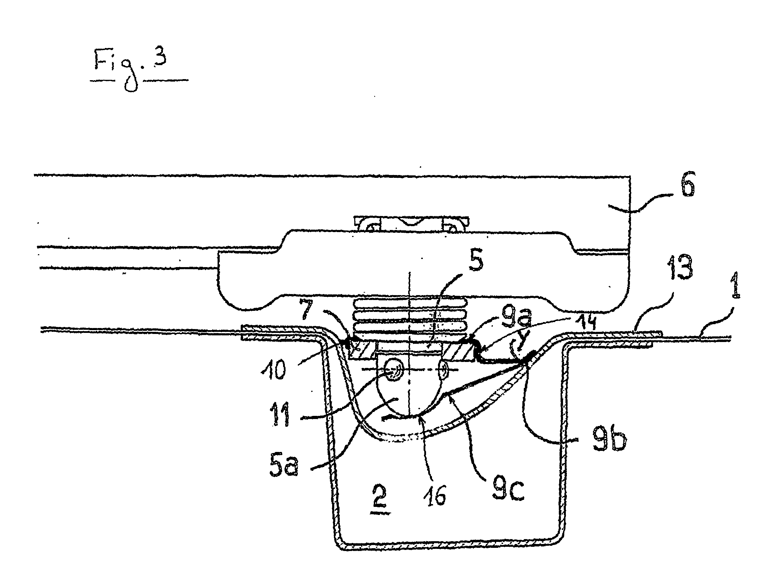

Conformément à l'invention, et telle que représentée aux figures 2 à 4, la pièce d'obturation 9 comporte une partie supérieure 9a, qui part de la partie centrale 9b et qui presente une forme adaptée pour permettre l'emboîtement élastique de cette partie supérieure 9a autour de l'élément de blocage 7. A cet effet, les figures 2 et 3 représentent une partie supérieure 9a qui s'étend sur l'ensemble de la face supérieure 7a de l'élément de blocage 7. A l'opposé de la partie centrale 9b, la partie supérieur 9a présente un bord tombé 10 qui vient reposer sur un bord de l'élément de blocage 7. Le bord opposé de cet élément 7 coopère lui avec un épaulement 14 réalisé entre la partie supérieure 9a et la partie centrale 9b.

Le montage de cette pièce d'obturation 9 s'effectue alors que le siège amovible 6 est relevé à 90°, de sorte que la cavité 2 ménagée dans le plancher 1 est accessible pour le monteur. Ce dernier fait passer l'opercule mobile 9c sous l'élément de blocage 7, puis pousse la pièce d'obturation jusqu'à ce que l'épaulement 14 entre en contact avec un bord de l'élément de blocage 7. Les dimensions de la pièce d'obturation 7 sont alors telles que le bord tombé 10 assure avec un bord opposé de l'élément de blocage 7 un second arrêt en translation. Il sera compris que pour réaliser ce blocage en translation de la pièce d'obturation 9 par rapport à l'élément de blocage 7, le monteur peut également procéder en recouvrant tout d'abord l'élément de blocage 7 avec la pièce d'obturation 9, en mettant en appui le bord tombé 10 contre un des bords de l'élément de blocage 7. Puis le monteur utilise les propriétés élastiques de la pièce d'obturation 9 pour coller l'épaulement 14 contre le bord opposé de l'élément de blocage. Les mêmes propriétés élastiques de la pièce d'obturation 9 tendent alors à immobiliser cette pièce 9 par rapport à l'élément de blocage 7, du fait de l'effort de rappel de l'épaulement 14 vers le bord tombé 10.

Dans tous les cas, la pièce d'obturation 9 est ainsi positionnée autour de l'élément de blocage 7, et bloquée en translation selon un axe longitudinal. Avantageusement, il peut être prévu de munir les bords latéraux de la partie supérieure 9a, situés entre le bord tombé 10 et l'épaulement 14, de bords relevés 12 pour assurer un second arrêt en translation selon un axe transversal. La présence de la pièce d'obturation 9 de part et d'autre de l'élément de blocage 7, notamment avec une partie supérieure 9a venant recouvrir la face supérieure 7a de l'élément de blocage 7 et une partie inférieure formée d'un opercule mobile 9c étant élastiquement plaquée en position de fermeture au contact de la face inférieure 7b de l'élément de blocage 7, interdit toute mobilité verticale.

Du fait de l'élasticité du matériau qui constitue la pièce d'obturation 9 (élasticité liée, par exemple, à l'épaisseur de la tôle), d'une part, et de la forme générale de ladite pièce d'obturation 9, d'autre part, l'opercule mobile 9c est mobile en rotation autour d'un axe Y, sensiblement horizontal et transversal, et défini par l'intersection de la surface dudit opercule mobile 9c et de la surface de la partie centrale 9b. Ladite lamelle 9c peut ainsi se comporter comme un ressort du type ressort à lame.

Lorsque le siège amovible 6 est installé sur le plancher 1, l'extrémité de verrouillage 5a se positionne dans l'orifice 7c de la gâche 7. Sous l'effet du poids du siège amovible 6, et compte tenu de la forme et de l'élasticité de la pièce d'obturation 9, l'opercule mobile 9c entre en rotation autour de l'axe Y et vers le fond du boîtier 3, entraînant alors le dégagement de l'orifice 7c précédemment obturé par ledit opercule mobile 9c, et autorisant la pénétration, puis le verrouillage, de l'extrémité de l'élément de verrouillage 5a (voir figure 3).

Lors du retrait du siège amovible 6 (voir figure 2), l'extrémité de verrouillage 5a est retiré de l'orifice 7c de l'élément de blocage 7. La configuration de l'ensemble de la pièce d'obturation 9, combinée à l'élasticité naturelle du matériau formant au moins l'opercule mobile 9c - qui forme un ressort de rappel de type ressort à lame ainsi que précédemment évoqué -, contribue alors à ramener l'opercule mobile 9c dans sa position initiale de plaquage contre la face inférieure 7b de l'élément de blocage 7, obturant à nouveau l'orifice 7c dudit élément 7.

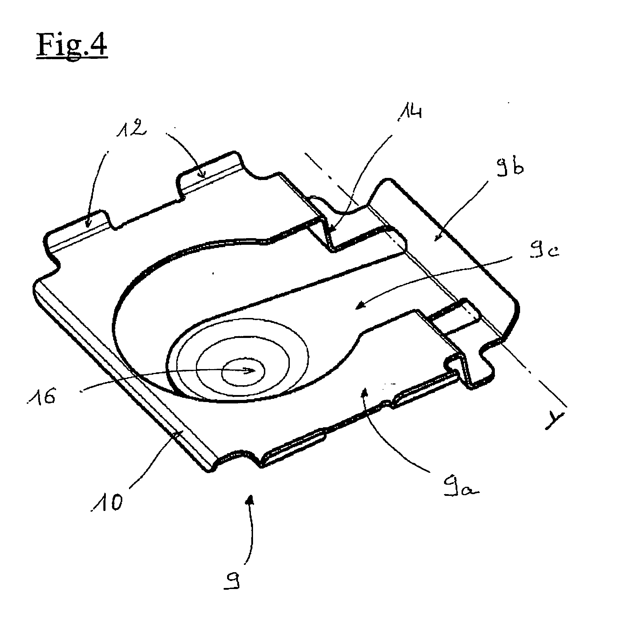

Selon une variante de réalisation, telle que représentée aux figures 3 et 4, l'extrémité de l'opercule mobile 9c opposée à la partie centrale 9b de la pièce d'obturation 9 peut présenter une partie creuse 16 dont la concavité est orientée vers le haut. Cette partie creuse 16 correspond à la zone de contact entre l'extrémité de l'élément de verrouillage 5a et la pièce d'obturation 9, de sorte qu'en position fermée, l'extrémité de l'élément de verrouillage 5a et le siège amovible 6 associé doivent descendre plus bas pour entrer au contact et générer l'escamotage de la pièce d'obturation 9. Cette configuration présente l'avantage, lorsque la pièce d'obturation 9 est en position escamotée telle que représentée à la figure 2, de nécessiter une cavité moins profonde puisque l'extrémité de la partie inférieure 9c doit descendre moins bas pour accompagner le dispositif de verrouillage 5.

Le dispositif de l'invention est simple, et d'une mise en oeuvre peu coûteuse et compatible avec une production en grande série.

## Revendications

1. Dispositif d'obturation d'un élément de blocage (7) du type comprenant un opercule mobile (9c) susceptible de prendre une position de fermeture dans laquelle l'opercule (9c) forme l'obturation d'un orifice (7c) de l'élément de blocage (7) et une position escamotée dans laquelle cet opercule mobile (9c) s'escamote sous ledit élément de blocage (7) pour laisser le passage dans l'orifice (7c) à un élément de verrouillage (5) apte à coopérer avec ledit élément de blocage (7), **caractérisé en ce que** le dispositif comprend une pièce d'obturation (9) formée d'une part d'une première partie supérieure (9a) qui est apte à être emboîtée élastiquement autour de l'élément de blocage (7) et qui présente une forme apte à laisser libre le passage à travers l'orifice (7c) de l'élément de blocage (7), et d'autre part d'une deuxième partie (9c) formée de l'opercule mobile, mobile en rotation par rapport à la première partie (9a) et dont une extrémité vient obturer l'orifice (7c) de l'élément de blocage (7) dans ladite position fermée de l'opercule (9c).

2. Dispositif d'obturation selon la revendication 1, **caractérisé en ce que** la première partie supérieure (9a) de la pièce d'obturation (9) comprend un bord formé par un épaulement (14) qui est au contact d'un premier bord de l'élément de blocage (7) et **en ce que** le bord opposé de cette partie supérieure (9a) est formé d'un bord tombé (10), au contact d'un second bord de l'élément de blocage (7), de sorte que la pièce d'obturation (9) est arrêtée en translation par rapport à l'élément de blocage (7).

3. Dispositif d'obturation selon l'une quelconque des revendications 1 ou 2, **caractérisé en ce qu'**au moins deux bords opposés de la première partie supérieure (9a) de la pièce d'obturation (9) présentent des bords relevés (12), de sorte que la pièce d'obturation (9) est arrêtée en translation par rapport à l'élément de blocage (7).

4. Dispositif d'obturation selon l'une quelconque des revendications précédentes, **caractérise en ce que** la pièce d'obturation (9) est formée d'une partie centrale (9b) qui porte la partie supérieure (9a) et l'opercule mobile (9c), de sorte que l'intersection de cette partie centrale (9b) et de l'opercule mobile (9) définit l'axe Y de rotation de l'opercule mobile (9c).

5. Dispositif selon la revendication 4 lorsqu'elle dépend de la revendication 2, **caractérisé en ce que** l'épaulement (14) est formé par l'intersection de la partie centrale (9b) avec la partie supérieure (9a).

6. Dispositif de verrouillage selon l'une quelconque des revendications précédentes, **caractérisé en ce que** l'extrémité de l'opercule mobile (9c), qui vient obturer l'orifice (7c) de l'élément de blocage (7) dans la position fermée de l'opercule (9c), présente une partie creuse (16).

## Claims

1. Device for plugging a blocking element (7) of the type comprising a mobile cap (9c) capable of assuming a closed position in which the cap (9c) forms the plug of an opening (7c) of the blocking element (7) and a retracted position in which said mobile cap (9c) retracts beneath said blocking element (7) in order to free the passage into the opening (7c) for a locking element (5) capable of cooperating with said blocking element (7), **characterized in that** the device comprises a plug element (9) formed, on the one hand, from an upper first part (9a) which is capable of being nested elastically around the blocking element (7) and which has a shape capable of allowing the free passage through the opening (7c) of the blocking element (7) and, on the other hand, from a second part (9c) formed from the mobile cap, mobile in rotation relative to the first part (9a) and of which one end plugs the opening (7c) of the blocking element (7) in said closed position of the cap (9c).

2. Plugging device as claimed in Claim 1, **characterized in that** the upper first part (9a) of the plug element (9) comprises an edge formed by a shoulder (14) which is in contact with a first edge of the blocking element (7) and **in that** the opposing edge of this upper part (9a) is formed from a flanged edge (10), in contact with a second edge of the blocking element (7), such that the plug element (9) is locked in translation relative to the blocking element (7).

3. Plugging device as claimed in any one of Claims 1 or 2, **characterized in that** at least two opposing edges of the upper first part (9a) of the plug element (9) have raised edges (12), such that the plug element (9) is locked in translation relative to the blocking element (7).

4. Plugging device as claimed in any one of the preceding claims, **characterized in that** the plug element (9) is formed from a central part (9b) which bears the upper part (9a) and the mobile cap (9c) such that the intersection of this central part (9b) and the mobile cap (9) defines the rotational axis Y of the mobile cap (9c).

5. Device as claimed in Claim 4 when it depends on Claim 2, **characterized in that** the shoulder (14) is formed by the intersection of the central part (9b) with the upper part (9a).

6. Locking device as claimed in any one of the preceding claims, **characterized in that** the end of the mobile cap (9c) which plugs the opening (7c) of the blocking element (7) in the closed position of the cap (9c), has a hollow part (16)

## Patentansprüche

1. Vorrichtung zum Verschließen eines Sperrelements (7) jener Art, die ein bewegliches Verschlussglied (9c) umfasst, das eine Schließstellung, in der das Verschlussglied (9c) den Verschluss einer Öffnung (7c) des Sperrelements (7) bildet, und eine zurückgezogene Stellung einnehmen kann, in der sich dieses bewegliche Verschlussglied (9c) unter dem Sperrelement (7) zurückzieht, um den Durchgang in die Öffnung (7c) für ein Verriegelungselement (5) freizugeben, das mit dem Sperrelement (7) zusammenwirken kann, **dadurch gekennzeichnet, dass** die Vorrichtung ein Verschlussteil (9) aufweist, das einerseits durch einen ersten oberen Teil (9a), der elastisch um das Sperrelement (7) aufgeschoben werden kann und der eine Form aufweist, die den Durchgang durch die Öffnung (7c) des Sperrelements (7) freigeben kann, und andererseits durch einen zweiten Teil (9c) gebildet wird, der von dem beweglichen Verschlussglied gebildet wird, das bezüglich des ersten Teils (9a) drehbeweglich ist und von dem ein Ende in der Schließstellung des Verschlussglieds (9c) die Öffnung (7c) des Sperrelements (7) verschließt.

2. Vorrichtung zum Verschließen nach Anspruch 1, **dadurch gekennzeichnet, dass** der erste obere Teil (9a) des Verschlussteils (9) einen Rand aufweist, der durch eine Schulter (14) gebildet wird, die mit einem ersten Rand des Sperrelements (7) in Kontakt steht, und dass der diesem oberen Teil (9a) gegenüberliegende Rand durch eine Bördelung (10) gebildet wird, die mit dem zweiten Rand des Sperrelements (7) in Kontakt steht, so dass eine translatorische Verschiebung des Verschlussteils (9) bezüglich des Sperrelements (7) angehalten wird.

3. Vorrichtung zum Verschließen nach Anspruch 1 oder 2, **dadurch gekennzeichnet, dass** mindestens zwei einander gegenüberliegende Ränder des ersten oberen Teils (9a) des Verschlussteils (9) erhöhte Ränder (12) aufweise, so dass ein translatorische Verschiebung des Verschlussteils (9) bezüglich des Sperrelements (7) angehalten wird.

4. Vorrichtung zum Verschließen nach den vorhergehenden Ansprüche, **dadurch gekennzeichnet, dass** das Verschlussteil (9) durch einen mittleren Teil (9b) gebildet wird, der den oberen Teil (9a) und das bewegliche Verschlussglied (9c) trägt, so dass der Schnittpunkt dieses mittleren Teils (9b) und des beweglichen Verschlussglieds (9c) die Y-Drehachse des beweglichen Verschlussglieds (9c) bildet.

5. Vorrichtung zum Verschließen nach Anspruch 4, sofern von Anspruch 2 abhängig, **dadurch gekennzeichnet, dass** die Schulter (14) durch den Schnittpunkt des mittleren Teils (9b) mit dem oberen Teil (9a) gebildet wird.

6. Vorrichtung zum Verschließen nach einem der vorhergehenden Ansprüche, **dadurch gekennzeichnet, dass** das Ende des beweglichen Verschlussglieds (9c), das die Öffnung (7c) des Sperrelements (7) in der Schließstellung des Verschlussglieds (9c) verschließt, einen hohlen Teil (16) aufweist.
